# EUROPÄISCHE PATENTSCHRIFT

(11) **EP 1 633 603 B1**
(45) Veröffentlichungstag und Bekanntmachung des Hinweises auf die Patenterteilung: **22.11.2006**
(21) Anmeldenummer: 04726851.1
(22) Anmeldetag: 10.04.2004
(51) Int. Cl.: B60R 19/22, B60R 19/18, B60R 21/34

(54) **STOSSFÄNGERANORDNUNG FÜR EIN FAHRZEUG, INSBESONDERE FÜR EIN KRAFTFAHRZEUG**
BUMPER DEVICE FOR A VEHICLE, IN PARTICULAR FOR A MOTOR VEHICLE
DISPOSITIF PARE-CHOCS DESTINE A UN VEHICULE, NOTAMMENT A UN VEHICULE MOTORISE

(30) Priorität: 30.05.2003 DE 10324460
(43) Veröffentlichungstag der Anmeldung: 15.03.2006
(73) Patentinhaber: Volkswagen Aktiengesellschaft, 38436 Wolfsburg (DE)
(72) Erfinder: NGUYEN, Ngoc-Dang, 38446 Wolfsburg (DE); BECKER, Dirk, 39599 Klein Möringen (DE)
(74) Vertreter: Liebl, Thomas
(86) Internationale Anmeldenummer: PCT/EP2004/003839
(87) Internationale Veröffentlichungsnummer: WO 2004/106118

(56) Entgegenhaltungen:
- EP-A- 0 947 727
- WO-A-03/072399
- DE-A- 10 143 532
- PATENT ABSTRACTS OF JAPAN Bd. 1999, Nr. 13, 30. November 1999 (1999-11-30) & JP 11 208389 A (NISSAN MOTOR CO LTD), 3. August 1999 (1999-08-03)

## Beschreibung

Die Erfindung betrifft eine Stoßfängeranordnung für ein Fahrzeug, insbesondere für ein Kraftfahrzeug, nach dem Oberbegriff des Anspruchs 1. Eine solche Stoßfängeranordnung ist aus DE 10143532 A1 bekannt.

Eine andere aus der DE 100 42 560 A1 bekannte Stoßfängeranordnung für ein Fahrzeug umfasst wenigstens einen im Fahrzeugfrontendbereich in Fahrzeugquerrichtung verlaufenden Stoßfängerquerträger. Ein Stoßfängerüberzug bildet die Außenhaut der Stoßfängeranordnung. Zwischen dem Stoßfängerquerträger und dem Stoßfängerüberzug ist wenigstens bereichsweise wenigstens ein energieabsorbierendes Einlegeteil angeordnet, wobei im Einlegeteil eine Mehrzahl von Deformations-Ausnehmungen und/oder Deformations-Freiräumen vorgesehen ist.

Bei dieser Stoßfängeranordnung ist durch den Stoßfängerquerträger, der mittels zwei Verbindungselementen als sogenannte Typschadenelemente mit den Längsträgern der Fahrzeugkarosserie verbunden ist, ein üblicher Deformationsbereich für den Fahrzeug- und Insassenschutz geschaffen. Zusätzlich ist durch das vor dem Stoßfängerquerträger angeordnete Einlegeteil, das als Deformations-Formteil ausgeführt ist, ein weiterer, bei relativ wenig Krafteinwirkung verformbarer Deformationsbereich als Fußgängeraufprallschutz geschaffen. Um einen ausreichend großen Fußgängerschutz erreichen zu können, muss das Deformations-Formteil dementsprechend dimensioniert sein, so dass im Kollisionsfall mit einem Fußgänger ein Eindringen des Beines des Fußgängers in das Deformations-Formteil bei einer dementsprechend großen Energieabsorption für eine weitgehende Verletzungsfreiheit des Fußgängers möglich ist. Das Deformations-Formteil ist aus einem Schaummaterial hergestellt, so dass ab einer bestimmten Eindringtiefe nachteilig eine nicht weiter deformierbare Blocklänge verbleibt und somit nicht die gesamte Materialstärke des Deformations-Formteils als Deformationsweg genutzt werden kann. Dadurch wird die Materialstärke des Deformations-Formteils im nicht deformierten Zustand durch den für einen ausreichenden Fußgängerschutz notwendigen Deformationsweg und der dabei verbleibenden Blocklänge des Deformations-Formteils nachteilig relativ groß. Durch die im Deformations-Formteil ausgebildeten Deformations-Ausnehmungen und/oder Deformations-Freiräume, die als Gitter- und/oder Wabenstruktur ausgebildet sind, wird ein Deformations-Formteil erhalten, das relativ wenig Gewicht aufweist aber aufgrund der oben beschriebenen Nachteile für einen ausreichenden Fußgängerschutz relativ groß dimensioniert ist.

Aus der EP 1 046 546 B1 ist eine Stoßfängeranordnung bekannt, bei der zwischen einem Stoßfängerüberzug und einem Montageelement, mit dem der Stoßfängerüberzug mit der Fahrzeugkarosserie verbunden werden kann, ein Abstand besteht, der mit einem Absorberschaum gefüllt ist. Der Absorberschaum weist im montierten Zustand der Stoßfängeranordnung im vertikal unteren Teil eine im Vergleich zum Absorberschaum im oberen Bereich des Abstandes zwischen dem Stoßfängerüberzug und dem Montageelement eine erhöhte Steifigkeit auf. Der relativ steife untere Teil des Absorberschaums ist integraler Bestandteil des Stoßfängers und erstreckt sich in Bezug auf den oberen Teil des Absorberschaums in Fahrtrichtung nach vorne. Der Abstand zwischen dem Stoßfängerüberzug und dem Montageelement ist dabei vollständig mit dem Absorberschaum ausgefüllt. Auch hier muss die Materialstärke in Fahrtrichtung gesehen des Absorberschaums nachteilig dementsprechend groß dimensioniert werden, um einen ausreichend großen Fußgängerschutz zu erhalten.

Aus der EP 0 947 727 A1 ist eine Stoßfängeranordnung bekannt, bei der eine energieabsorbierende Schaumstruktur zwischen einem Stoßfängerüberzug und einem Stoßfängerquerträger angeordnet ist. Die Schaumstruktur ist dabei aus drei parallel zur Krafteinleitungsrichtung angeordneten Schaumstoffschichten mit unterschiedlichen Energieabsorptionsvermögen aufgebaut. Auch hier ist bei einem Eindringen z. B. eines Beines eines Fußgängers bei einer Kollision mit demselben der Deformationsweg der Schaumstruktur dahingehend begrenzt, da nach anfänglicher Deformation der Schaumstruktur eine nicht deformierbare Restblocklänge der einzelnen Schaumstoffschichten verbleibt. Um somit einen ausreichend großen Fußgängerschutz zu gewährleisten, muss die Schaumstruktur in Fahrtrichtung gesehen dementsprechend groß ausgelegt sein, was aus bauraumtechnischer Sicht oftmals nicht möglich ist.

Des weiteren ist aus der US 5,435,619 eine Stoßfängeranordnung bekannt, bei der ein im Querschnitt C-förmig ausgebildeter Stoßfängerüberzug ein am Stoßfängerquerträger angeordnetes Energieabsorptionselement im montierten Zustand übergreift. Das Energieabsorptionselement ist aus einer Mehrzahl von nebeneinander angeordneten Rohrabschnitten gebildet, wobei die axiale Ausrichtung der Rohrabschnitte in etwa der Fahrtrichtung des Kraftfahrzeuges entspricht. Auf der Innenseite des Stoßfängerüberzuges sind stiftförmig wegragende Erhebungen ausgebildet, die im montierten Zustand des Stoßfängerüberzuges in die Rohrabschnitte des Energieabsorptionselements einragen. Von der Rückseite des Stoßfängerquerträgers aus sind die stiftförmigen Erhebungen des Stoßfängerüberzuges mit Bolzen mit den Stoßfängerquerträger verbunden. Somit ist ein insgesamt stabiler Aufbau der Stoßfängeranordnung geschaffen, der nur bedingt mit Energieabsorptionseigenschaften hinsichtlich eines Aufpralls eines z. B. Fußgängers eingesetzt werden kann.

Aufgabe der Erfindung ist es, eine Stoßfängeranordnung für ein Fahrzeug zu schaffen, mit der bei einem kompakten Aufbau der Stoßfängeranordnung ein guter Fußgängerschutz möglich ist.

Diese Aufgabe wird mit den Merkmalen des Anspruchs 1 gelöst.

Gemäß Anspruch 1 ist das Einlegeteil dreischichtig aus einer ersten Einlegeteil-Randschicht als erste Energieabsorptionsschicht und einer Einlegeteil-Mittelschicht als zweite Energieabsorptionsschicht sowie einer zweiten Einlegeteil-Randschicht als dritte Energieabsorptionsschicht aufgebaut. Die Einlegeteil-Mittelschicht weist gegenüber den beiden Einlegeteil-Randschichten ein unterschiedliches Energieabsorptionsvermögen auf. Die Einlegeteil-Mittelschicht ist zudem dem Stoßfängerquerträger so zugeordnet, dass im montierten Zustand des Einlegeteils die Einlegeteil-Mittelschicht in etwa in Höhe des Stoßfängerquerträgers anordenbar ist. Die Deformations-Ausnehmungen und/oder die Deformations-Freiräume sind in der Einlegeteil-Mittelschicht ausgebildet.

Vorteilhaft bei dieser Stoßfängeranordnung ist, dass im Kollisionsfall bei einer Krafteinwirkung auf den Stoßfängerüberzug das Einlegeteil unter Ausnutzung der Deformations-Ausnehmungen und/oder der Deformations-Freiräume wenigstens bereichsweise in Fahrzeugquerrichtung und/oder in Fahrzeuglängsrichtung mit geringer Blocklänge zur Energieabsorption plastisch verformbar ist. Somit kann sich die Einlegeteil-Mittelschicht im Kollisionsfall so verformen, dass die Einlegeteil-Mittelschicht beispielsweise in Fahrzeugquerrichtung durch Ausnutzung der Deformations-Ausnehmungen und/oder der Deformations-Freiräume ausbeulen kann, wodurch die nicht weiter deformierbare Blocklänge des Einlegeteils im Bereich der Einlegeteil-Mittelschicht vorteilhaft reduziert werden kann. Bei einer Anordnung der Einlegeteil-Mittelschicht in Fahrtrichtung gesehen vor dem Stoßfängerquerträger ist somit der Abstand zwischen dem Stoßfängerquerträger und dem Stoßfängerüberzug relativ gering zu halten, da durch die Ausbildung der Deformations-Ausnehmungen und/oder der Deformations-Freiräume in der Einlegeteil-Mittelschicht auch bei einer geringeren Materialstärke in Fahrtrichtung gesehen ein gutes Energieabsorptionsverhalten im Kollisionsfall beispielsweise mit einem Fußgänger gegeben ist.

In einer Weiterbildung können die drei Energieabsorptionsschichten im montierten Zustand des Einlegeteils in Fahrzeughochachsenrichtung gesehen übereinander angeordnet sein. In einer bevorzugten Ausführungsform können sich die Energieabsorptionsschichten jeweils über die gesamte Einlegeteilbreite erstrecken. Somit ist über die gesamte Breite des Einlegeteils ein gleichbleibend guter Fußgängerschutz gewährleistet. Ist das Einlegeteil über die gesamte Breite des Stoßfängerquerträgers angeordnet, so kann auch bei einer Kollision mit einem Fußgänger im seitlichen Randbereich der Stoßfängeranordnung ein guter Fußgängerschutz erhalten werden. Grundsätzlich ist auch ein Aufbau aus mehr als drei Energieabsorptionsschichten des Einlegeteils möglich, wobei aus herstellungstechnischer Sicht zu beachten ist, dass der durch die Mehrzahl der Energieabsorptionsschichten erhöhte Herstellungsaufwand in einem reellen Verhältnis zur Erhöhung des Energieabsorptionsvermögens des Einlegeteils steht.

In einer weiteren Ausführungsform können die beiden Einlegeteil-Randschichten aus einem Schaummaterial hergestellt sein und in etwa eine gleiche Dichte aufweisen. Somit sind die Einlegeteil-Randschichten mit einem im wesentlichen gleichen Energieabsorptionsvermögen ausgebildet. Dadurch ist die Herstellung des Einlegeteils vereinfacht, da trotz eines dreischichtigen Aufbaus des Einlegeteils nur zwei unterschiedliche Materialien zur Herstellung des Einlegeteils notwendig sind.

In einer bevorzugten Ausführungsform können die beiden Einlegeteil-Randschichten aus einem härteren Schaummaterial hergestellt sein und die Einlegeteil-Mittelschicht kann aus einem gegenüber dem Schaummaterial der Einlegeteil-Randschichten weicheren Schaummaterial hergestellt sein. Die genaue Auslegung der Härte bzw. der Weichheit des Schaummaterials kann je nach Anforderungen der speziellen Ausführung des Einlegeteils bzw. der gesamten Stoßfängeranordnung festgelegt werden.

In einer Weiterbildung können die beiden Einlegeteil-Randschichten jeweils mit der Einlegeteil-Mittelschicht wenigstens bereichsweise in wenigstens einem flächigen Anlagebereich miteinander fest verbunden sein zur Ausbildung des Einlegeteils. In einer bevorzugten Ausführungsform können die Einlegeteil-Randschichten jeweils mit der Einlegeteil-Mittelschicht verschäumt oder fest miteinander verklebt sein. Somit ist insgesamt ein einstückiges Einlegeteil geschaffen, wodurch die Montage des Einlegeteils zwischen dem Stoßfängerquerträger und dem Stoßfängerüberzug vorteilhaft vereinfacht wird.

In einer besonders bevorzugten Ausführungsform kann das Einlegeteil im Querschnitt gesehen wenigstens bereichsweise U-förmig ausgebildet sein. Im montierten Zustand des Einlegeteils stehen dabei die beiden Einlegeteil-Randschichten mit je einem Randschicht-Schenkelbereich entgegen der Fahrtrichtung über die Einlegeteil-Mittelschicht über zur Ausbildung der beiden U-Schenkel. Je ein Randschicht-Basisbereich, der zusammen mit dem entsprechenden Randschicht-Schenkelbereich die Einlegeteil-Randschicht bildet, bildet zusammen mit der dazwischenliegenden Einlegeteil-Mittelschicht die U-Basis. Das Einlegeteil übergreift im montierten Zustand den Stoßfängerquerträger in etwa formschlüssig, so dass die beiden Randschicht-Schenkelbereiche des Einlegeteils und die Einlegeteil-Mittelschicht wenigstens bereichsweise in einer flächigen Anlageverbindung am Stoßfängerquerträger anliegen. Durch die U-förmige Ausbildung des Einlegeteils kann dieses einfach am Stoßfängerquerträger durch Aufstecken montiert werden. Zudem können in einer vorteilhaften Weiterbildung an der Rückseite des Einlegeteils, die im montierten Zustand des Einlegeteils dem Stoßfängerquerträger zugeordnet ist, Klebestreifen vorgesehen sein, mit denen wenigstens punktuell eine Fixierung des Einlegeteils mittels einer Klebeverbindung für eine weitere Erleichterung der Montage des Einlegeteils am Stoßfängerquerträger möglich ist. Aufgrund der Ausbildung von flächigen Anlageverbindungen zwischen dem Einlegeteil und dem Stoßfängerquerträger ist eine funktionssichere Abstützung des Einlegeteils am Stoßfängerquerträger im Kollisionsfall gegeben.

In einer Weiterbildung kann der Stoßfängerquerträger im Querschnitt gesehen wenigstens bereichsweise U-förmig ausgebildet sein. Im montierten Zustand des Stoßfängerquerträgers sind dabei die beiden U-Schenkel in etwa horizontal angeordnet und weisen entgegen der Fahrtrichtung, wobei die U-Basis in etwa vertikal angeordnet ist. An den beiden U-Schenkeln des Stoßfängerquerträgers ist jeweils eine wenigstens im Bereich der Einlegeteil-Randschichten in Fahrzeugquerrichtung verlaufende Abstützlasche angeordnet. Somit sind im montierten Zustand die beiden Einlegeteil-Randschichten im Kollisionsfall jeweils an der zugeordneten Abstützlasche abstützbar. Durch die U-förmige Ausbildung des Stoßfängerquerträgers ist ein insgesamt stabiles Bauteil mit relativ geringem Gewicht geschaffen. Durch die an den U-Schenkeln des Stoßfängerquerträgers angeordneten Abstützlaschen ist für die Einlegeteil-Randschichten eine funktionssichere Abstützung im Kollisionsfall geschaffen, so dass im montierten Zustand des Einlegeteils am Stoßfängerquerträger für alle drei Schichten eine Abstützung geschaffen ist, nämlich die Abstützlaschen für die Einlegeteil-Randschichten und die U-Basis des Stoßfängerquerträgers für die Einlegeteil-Mittelschicht. Die Randschicht-Schenkelbereiche der Einlegeteil-Randschichten sind dabei in der Länge in Fahrtrichtung gesehen so ausgeführt, dass sie auf den jeweils zugeordneten U-Schenkeln des Stoßfängerquerträgers aufliegend jeweils bis zur Abstützlasche am Stoßfängerquerträger reichen.

In einer konkreten Ausführungsform kann an der Einlegeteil-Mittelschicht eine Mehrzahl von noppenartigen Deformationstöpfen ausgebildet sein, wobei die Topfinnenräume die Deformations-Ausnehmungen bilden. Die einfach herzustellenden Deformationstöpfe an der Einlegeteil-Mittelschicht können sich im Kollisionsfall beispielsweise mit einem Fußgänger in die durch die Topfinnenräume gebildeten Deformations-Ausnehmungen ausbeulen, wodurch die nicht weiter deformierbare Blocklänge des Einlegeteils im Bereich der Einlegeteil-Mittelschicht vorteilhaft reduziert wird. Somit kann der für einen optimalen Fußgängerschutz notwendige Bauraum zwischen Stoßfängerquerträger und Stoßfängerüberzug gering gehalten werden, wodurch die gestalterische Freiheit im Bereich der Stoßfängeranordnung vorteilhaft erhöht ist.

In einer Weiterbildung können die Topfböden der Deformationstöpfe im montierten Zustand des Einlegeteils in Richtung des Stoßfängerquerträgers weisen. In einer bevorzugten Ausführungsform liegen die Topfböden der Deformationstöpfe am Stoßfängerquerträger an. Der in Richtung Stoßfängerquerträger weisende Topfboden jedes Deformationstopfes ist derart im montierten Zustand des Einlegeteils angeordnet, dass im normalen Fahrbetrieb Klapperfreiheit zwischen den beiden Bauteilen gewährleistet ist und im Falle einer Kollision der Topfboden sich am Stoßfängerquerträger abstützen kann und somit der im Falle einer Fußgängerkollision notwendige Deformationsweg des Einlegeteils durch ein Ausbeulen der Topfwände in die Deformations-Ausnehmungen gegeben ist. Grundsätzlich können die Deformationstöpfe auch ohne Topfboden ausgeführt sein, so dass eine Abstützung am Stoßfängerquerträger mit den jeweils zugeordneten Stirnseiten der Topfwände erfolgt.

In einer weiteren Ausführungsform kann die jedem Topfboden der Deformationstöpfe gegenüberliegende Seite offen ausgebildet sein. Bei dieser Ausführungsform sind die Deformationstöpfe am Einlegeteil einfach herzustellen, z. B. durch Tiefziehen. Beim Spritzgießen ist durch die offene Seite der Deformationstöpfe eine einfache Werkzeugentformung gewährleistet. Grundsätzlich kann die dem Topfboden gegenüberliegende Seite auch geschlossen ausgebildet sein oder die Deformationstöpfe können beidseitig offen ausgebildet sein.

In einer besonders bevorzugten Ausgestaltung können die Deformationstöpfe in etwa rechteckförmig ausgebildet sein. Dabei können wenigstens die im montierten Zustand des Einlegeteils in etwa vertikal verlaufenden Topfwände konisch verlaufen, so dass die Fläche des jeweiligen Topfbodens kleiner als die Fläche der gegenüberliegenden Seite ist. Somit sind zwischen den in etwa vertikal verlaufenden Topfwänden Deformations-Freiräume ausbildbar. Dadurch ist im Kollisionsfall die Möglichkeit des Ausbeulens der Einlegeteil-Mittelschicht durch die zusätzlichen Deformations-Freiräume zu den durch die Topfinnenräume gebildeten Deformations-Ausnehmungen vorteilhaft verbessert. Im Querschnitt durch die Einlegeteil-Mittelschicht, der durch eine durch die Fahrzeuglängsrichtung und Fahrzeugquerrichtung aufgespannten Ebene definiert ist, verlaufen die Topfwände der Deformationstöpfe, die nebeneinander über die Einlegeteilbreite an der Einlegeteil-Mittelschicht angeordnet sein können, in einem Zick-Zack-Verlauf. Im Kollisionsfall, beispielsweise mit einem Bein eines Fußgängers, kann die Einlegeteil-Mittelschicht somit in der Art einer Ziehharmonika in Fahrzeugquerrichtung durch die Deformations-Ausnehmungen und die Deformations-Freiräume ausbeulen, wodurch der zur Verfügung stehende Deformationsweg im Vergleich zu einem aus Vollschaummaterial gleicher Dicke hergestellten Einlegeteil vorteilhaft vergrößert ist.

In einer alternativen Ausführung zu den Deformationstöpfen kann die Einlegeteil-Mittelschicht durch eine Mehrzahl von im montierten Zustand des Einlegeteils in Fahrzeughochachsenrichtung verlaufenden Deformationsstegen gebildet sein. Dabei sind zwischen den Deformationsstegen die Deformations-Freiräume ausgebildet. Auch hier ist ein Ausbeulen der Deformationsstege in die Deformations-Freiräume im Kollisionsfall funktionssicher gewährleistet. Damit ist die verbleibende Restblocklänge der Einlegeteil-Mittelschicht vorteilhaft reduziert.

In einer Weiterbildung können die Deformationsstege im Querschnitt gesehen rechteckförmig ausgebildet sein, wobei jeweils eine schmale Stegstirnseite in Fahrtrichtung weist. Damit ist zusammen mit den Einlegeteil-Randschichten ein stabiles Einlegeteil geschaffen, das im Bereich der Einlegeteil-Mittelschicht aufgrund der Deformationsstege mit den dazwischen angeordneten Deformations-Freiräumen einen guten Fußgängerschutz aufgrund reduzierter Restblocklänge gewährleistet.

Die beiden Einlegeteil-Randschichten können einfach aus einem Vollschaummaterial hergestellt werden, da im montierten Zustand des Einlegeteils die Einlegeteil-Randschichten ober- bzw. unterhalb des Stoßfängerquerträgers angeordnet sind und diesen somit übergreifen, wodurch ein im Vergleich zur Einlegeteil-Mittelschicht größerer Deformationsweg zur Verfügung steht. Somit führt die größere Restblocklänge des Vollschaummaterials der Einlegeteil-Randschichten gegenüber einer Ausführung des Schaummaterials mit Deformations-Ausnehmungen und/oder Deformations-Freiräumen zu keiner Einschränkung bzw. Verminderung des Fußgängerschutzes. Grundsätzlich können auch in den Einlegeteil-Randschichten Deformations-Ausnehmungen und/oder Deformations-Freiräume ausgebildet sein, so dass auch im Bereich der Einlegeteil-Randschichten im Kollisionsfall ein Ausbeulen vorzugsweise in Fahrzeugquerrichtung zur Vergrößerung des Deformationsweges möglich ist.

In einer weiteren Ausführungsform kann im montierten Zustand der Stoßfängeranordnung die dem Stoßfängerüberzug zugewandte Seite des Einlegeteils entlang der Innenkontur des Stoßfängerüberzuges verlaufen. In einer vorteilhaften Weiterbildung ist zwischen dem Einlegeteil und der Innenkontur des Stoßfängerüberzuges ein gleichbleibend geringer Spaltabstand ausgebildet. Dadurch wird der Stoßfängerüberzug derart stabilisiert, dass z. B. beim Anschieben des Fahrzeuges ein unerwünschtes Einbeulen des Stoßfängerüberzugs verhindert wird. Dabei wird die durch das Anschieben eingeleitete Kraft in die Stoßfängeranordnung über das Einlegeteil, das sich am Stoßfängerquerträger abstützt und somit als Abstandshalter fungiert, in die Längsträger der Fahrzeugkarosserie eingeleitet.

Anhand einer Zeichnung wird die Erfindung näher erläutert.

Es zeigen:
- Fig.: 1 eine schematische, perspektivische Darstellung einer Stoßfängeranordnung mit einem Einlegeteil an einem Fahrzeugfrontend,
- Fig. 2: eine schematische Schnittdarstellung durch die Stoßfängeranordnung in Fahrzeughochachsenrichtung,
- Fig. 3: eine schematische, perspektivische Darstellung eines Einlegeteils in einer weiteren Ausführungsform,
- Fig. 4: eine schematische Schnittdarstellung durch das Einlegeteil von Fig. 3,
- Fig. 5: eine schematische Schnittdarstellung eines Horizontalschnitts in Fahrzeugquerrichtung durch eine Stoßfängeranordnung mit dem Einlegeteil von Fig. 3 im montierten Zustand,
- Fig. 6: eine vergrößerte Darstellung der Einzelheit A von Fig. 5 im Kollisionsfall,
- Fig. 7: eine schematische, perspektivische Darstellung eines Einlegeteils in einer weiteren Ausführungsform von vorne, und
- Fig. 8: eine schematische, perspektivische Darstellung des Einlegeteils von Fig. 7 von hinten.

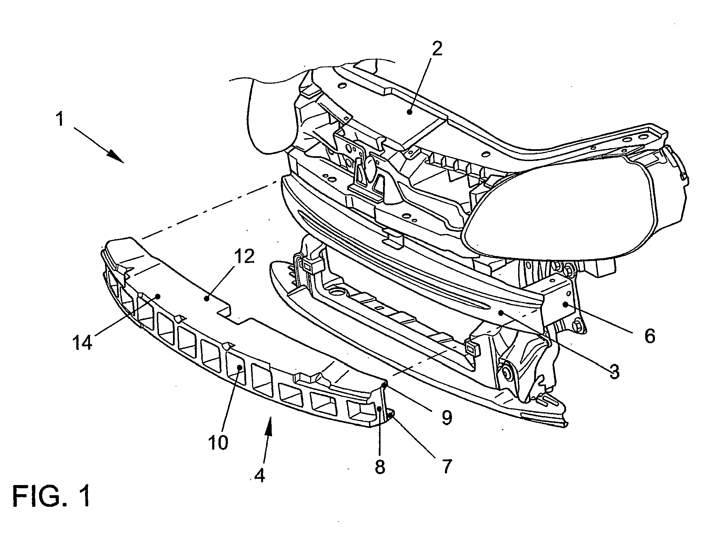

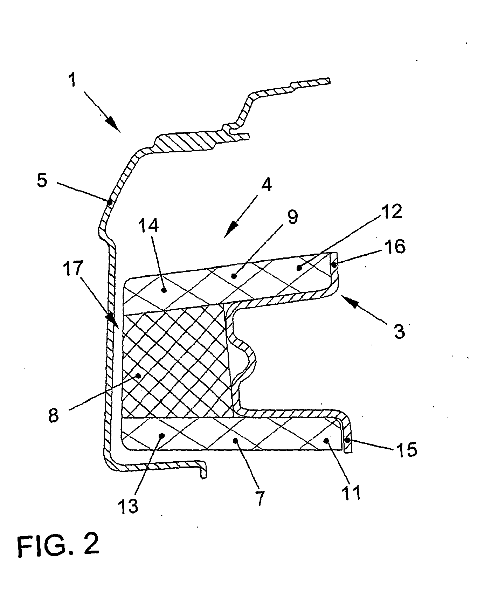

In Fig. 1 ist schematisch eine perspektivische Darstellung einer Stoßfängeranordnung 1 an einem Fahrzeugfrontend 2 dargestellt. Die Stoßfängeranordnung 1 ist durch einen Stoßfängerquerträger 3, ein Einlegeteil 4 und einen hier aus Übersichtlichkeitsgründen nicht mit dargestellten Stoßfängerüberzug 5 gebildet. Der Stoßfängerquerträger 3 ist mittels zwei Typschadenelementen 6, die jeweils an beiden in Fahrzeugquerrichtung gesehenen Enden des Stoßfängerquerträgers 3 angeordnet sind, mit dem Fahrzeugfrontend 2 fest verbunden. Das Einlegeteil 4, das in Fig. 1 in einer Explosionsdarstellung vor dem Stoßfängerquerträger 3 gezeigt ist, wird bei der Montage auf den Stoßfängerquerträger 3 aufgesteckt und übergreift diesen (siehe auch Fig. 2). Im fertig montierten Zustand der Stoßfängeranordnung 1 ist das Einlegeteil 4, das energieabsorbierende Eigenschaften aufweist, zwischen dem Stoßfängerquerträger 3 und dem Stoßfängerüberzug 5 angeordnet. Bei der in Fig. 1 dargestellten Ausführungsvariante des Einlegeteils 4, das in Fahrzeughochachsenrichtung gesehen aus einer ersten Einlegeteil-Randschicht 7, einer Einlegeteil-Mittelschicht 8 und einer zweiten Einlegeteil-Randschicht 9 aufgebaut ist, sind in der Einlegeteil-Mittelschicht 8 eine Mehrzahl von Deformationstöpfen 10 ausgebildet. Die Deformationstöpfe 10 sind nebeneinander über die komplette Breite des Einlegeteils 4 angeordnet. Die Topfinnenräume der Deformationstöpfe 10 bilden dabei jeweils eine Deformations-Ausnehmung. Die im montierten Zustand des Einlegeteils 4 dem Stoßfängerüberzug 5 zugeordnete Seite der Deformationstöpfe 10 ist jeweils offen ausgeführt.

In Fig. 2 ist schematisch eine Schnittdarstellung in Fahrzeughochachsenrichtung durch die Stoßfängeranordnung 1 dargestellt. Dabei ist der Aufbau des Einlegeteils 4 aus der ersten Einlegeteil-Randschicht 7, der Einlegeteil-Mittelschicht 8 und der zweiten Einlegeteil-Randschicht 9 zu erkennen. Insgesamt ist das Einlegeteil 4 im Querschnitt gesehen U-förmig ausgebildet, wobei im montierten Zustand des Einlegeteils 4 die beiden Einlegeteil-Randschichten 7 und 9 mit je einem Randschicht-Schenkelbereich 11 und 12 entgegen der Fahrtrichtung über die Einlegeteil-Mittelschicht 8 überstehen. Je ein Randschicht-Basisbereich 13 und 14, der jeweils zusammen mit dem entsprechenden Randschicht-Schenkelbereich 11 und 12 die Einlegeteil-Randschicht 7 und 9 ausbildet, bildet zusammen mit der dazwischenliegenden Einlegeteil-Mittelschicht 8 die U-Basis, wobei durch die Randschicht-Schenkelbereiche 11 und 12 die U-Schenkel des Einlegeteils 4 ausgebildet sind. Das Einlegeteil 4 übergreift im montierten Zustand den Stoßfängerquerträger 3 formschlüssig, so dass die beiden Randschicht-Schenkelbereiche 11 und 12 des Einlegeteils 4 und die Einlegeteil-Mittelschicht 8 in einer flächigen Anlageverbindung am Stoßfängerquerträger 3 anliegen. Der Stoßfängerquerträger 3 ist ebenfalls U-förmig ausgebildet, wobei im montierten Zustand des Stoßfängerquerträgers 3 die beiden U-Schenkel in etwa horizontal angeordnet sind und entgegen der Fahrtrichtung weisen und die U-Basis in etwa vertikal angeordnet ist. An den beiden U-Schenkeln des Stoßfängerquerträgers 3 ist jeweils eine in Fahrzeugquerrichtung verlaufende Abstützlasche 15 und 16 angeordnet, so dass sich im montierten Zustand die beiden Einlegeteil-Randschichten 7 und 8 mit den jeweiligen Randschicht-Schenkelbereichen 11 und 12 an der zugeordneten Abstützlasche im Kollisionsfall abstützen können. Die dem Stoßfängerüberzug 5 im montierten Zustand der Stoßfängeranordnung 1 zugewandte Seite des Einlegeteils 4 verläuft mit geringem Spaltabstand 17 entlang der Innenkontur des Stoßfängerüberzuges, so dass z. B. bei einem Anschieben des Fahrzeuges durch die dabei einwirkende Kraft auf den Stoßfängerüberzug 5 keine Einbeulung desselben sondern eine Abstützung am Einlegeteil 4 erfolgen kann. Durch den zwischen dem Stoßfängerüberzug 5 und dem Einlegeteil 4 ausgebildeten Spaltabstand 17 ist auch bei toleranzbedingten Abweichungen der beteiligten Bauteile eine funktionssichere Montage der Stoßfängeranordnung 1 möglich.

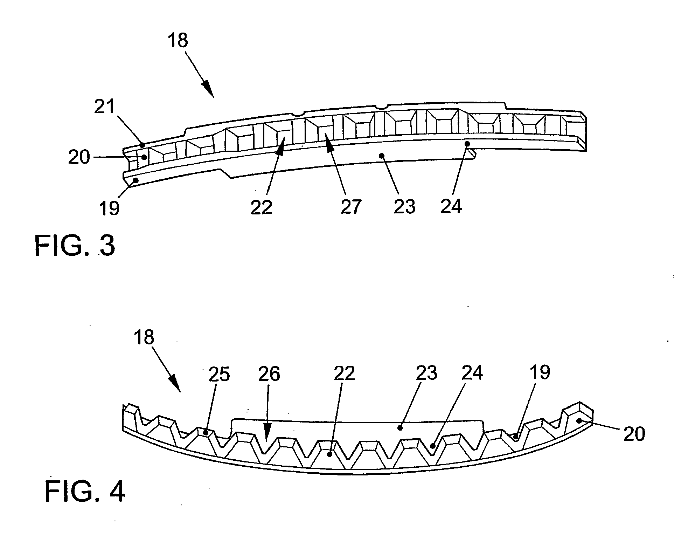

In Fig. 3 ist schematisch eine perspektivische Darstellung einer weiteren Ausführungsform eines Einlegeteils 18 dargestellt. Der Grundaufbau des Einlegeteils 18 besteht auch hier aus einer Einlegeteil-Randschicht 19, einer Einlegeteil-Mittelschicht 20 und einer Einlegeteil-Randschicht 21. Im montierten Zustand des Einlegeteils 18 sind die drei Schichten 19, 20 und 21 in Fahrzeughochachsenrichtung gesehen übereinander angeordnet. In der Einlegeteil-Mittelschicht 20 sind eine Mehrzahl von nebeneinanderliegenden über die komplette Breite des Einlegeteils 18 angeordneten Deformationstöpfen 22 ausgebildet. Im mittleren Bereich bezogen auf die Fahrzeugquerrichtung im montierten Zustand des Einlegeteils 18 ist dieses im Querschnitt gesehen U-förmig ausgebildet, wobei die U-Schenkel durch Randschicht-Schenkelbereiche 23, die Bestandteil der Einlegeteil-Randschichten 19 und 20 sind, gebildet sind. Die U-Basis ist durch die Einlegeteil-Mittelschicht und den jeweiligen Randschicht-Basisbereichen 24 der Einlegeteil-Randschichten 19 und 21 gebildet.

Aus der in Fig. 4 schematisch dargestellten Draufsicht, bei der die Einlegeteil-Randschicht 21 weggelassen ist, ist die Ausbildung der Deformationstöpfe 22 an der Einlegeteil-Mittelschicht 20 zu erkennen. Die Deformationstöpfe 22 sind in ihrer Grundform dabei rechteckförmig ausgebildet, wobei die im montierten Zustand des Einlegeteils 18 vertikal verlaufenden Topwände konisch verlaufen, so dass die Fläche des jeweiligen Topfbodens 25 kleiner als die Fläche der gegenüberliegenden Seite ist. Somit sind zwischen den vertikal verlaufenden Topfwänden Deformations-Freiräume 26 ausgebildet. Zusätzlich zu den Deformations-Freiräumen 26 sind durch die Topfinnenräume der Deformationstöpfe 22 Deformations-Ausnehmungen 27 ausgebildet, so dass im Kollisionsfall ein Ausbeulen der Deformationstöpfe 22 in die Deformations-Freiräume 26 und/oder in die Deformations-Ausnehmungen 27 erfolgen kann für eine geringe Restblocklänge der Einlegeteil-Mittelschicht 20. Im montierten Zustand des Einlegeteils 18 an einem Stoßfängerquerträger 3 (hier nicht mit dargestellt) übergreifen die Randschicht-Schenkelbereiche 23 der Einlegeteil-Randschichten 19 und 21 den Stoßfängerquerträger analog zu der in Fig. 2 dargestellten Ausführungsvariante des Einlegeteils 4. Somit ist auch hier insbesondere im Bereich der Einlegeteil-Mittelschicht 20, bei der nur ein geringer Deformationsweg zwischen dem Stoßfängerüberzug und dem Stoßfängerquerträger besteht aufgrund der Möglichkeit des Ausbeulens der Deformationstöpfe 22 der Einlegeteil-Mittelschicht 20 in die Deformations-Freiräume 26 und/oder in die Deformations-Ausnehmungen 27 ein guter Fußgängerschutz gewährleistet.

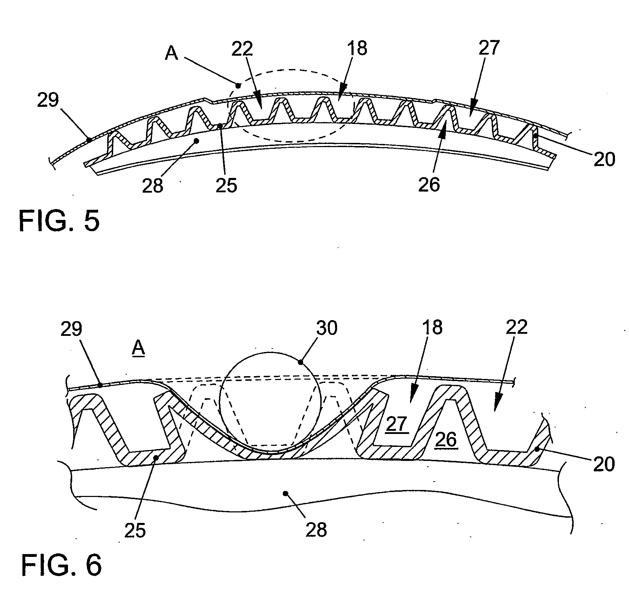

In Fig. 5 ist schematisch eine Schnittdarstellung des Einlegeteils 18 durch die Einlegeteil-Mittelschicht 20 in einer Horizontalebene gezeigt, wobei das Einlegeteil 18 im montierten Zustand zwischen einem Stoßfängerquerträger 28 und einem Stoßfängerüberzug 29 gezeigt ist. Durch die konisch verlaufenden Topfwände der Deformationstöpfe 22 ist insgesamt in der Einlegeteil-Mittelschicht 20 ein Zick-Zack-Verlauf erhalten, so dass im Kollisionsfall, beispielsweise mit einem Fußgänger, funktionssicher eine Ausbeulung der Deformationstöpfe 22 in die Deformations-Freiräume 26 und/oder in die Deformations-Ausnehmungen 27 gewährleistet ist.

In Fig. 6 ist schematisch eine vergrößerte Darstellung der Einzelheit A von Fig. 5 gezeigt. Dabei ist der Kollisionsfall mit einem schematisch dargestellten Bein 30 eines Fußgängers gezeigt. Der Stoßfängerüberzug 29 beult dadurch in Richtung Stoßfängerquerträger 28 ein und die Deformationstöpfe 22 weichen aufgrund ihrer Zick-Zack-Anordnung in Fahrzeugquerrichtung in die Deformations-Freiräume 26 und/oder Deformations-Ausnehmungen 27 aus. Somit steht als Deformationsweg beinahe der vollständige Bauraum zwischen dem Stoßfängerüberzug 29 und dem Stoßfängerquerträger 28 zur Verfügung. Die Restblocklänge der Einlegeteil-Mittelschicht 20 ist aufgrund der Ausführung mit Deformationstöpfen 22 und dazwischen angeordneten Deformations-Freiräumen 26 und Deformations-Ausnehmungen 27 weitgehend zu vernachlässigen. Dadurch wird trotz des nur gering zur Verfügung stehenden Bauraums zwischen dem Stoßfängerquerträger 28 und dem Stoßfängerüberzug 29 ein guter Fußgängerschutz erhalten.

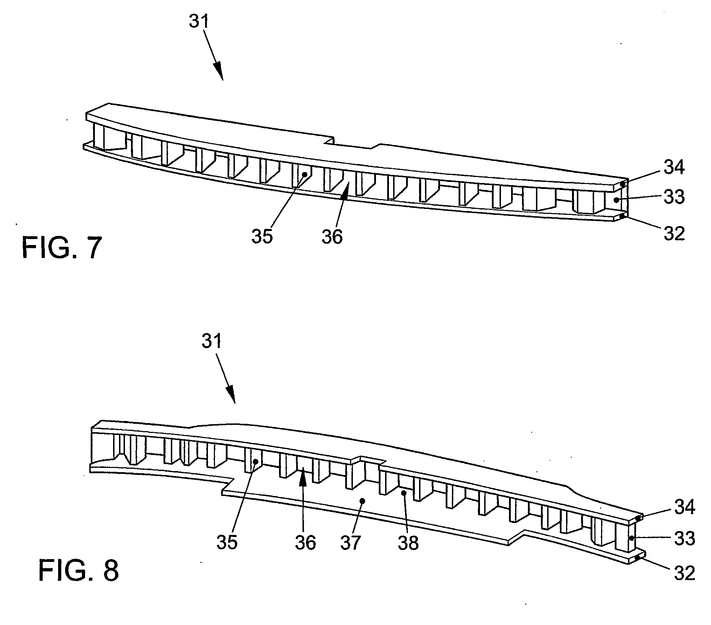

In Fig. 7 ist schematisch eine perspektivische Darstellung von vorne einer weiteren Ausführungsform eines Einlegeteils 31 dargestellt. Auch hier ist das Einlegeteil 31 aus einer ersten Einlegeteil-Randschicht 32, einer Einlegeteil-Mittelschicht 33 und einer zweiten Einlegeteil-Randschicht 34 aufgebaut. Die Einlegeteil-Mittelschicht 33 besteht hierbei aus Deformationsstegen 35, die regelmäßig verteilt über die Breite des Einlegeteils 31 in einer Mehrzahl angeordnet sind. Zwischen den Deformationsstegen 35 sind jeweils Deformations-Freiräume 36 ausgebildet, so dass auch hier im Kollisionsfall ein Ausbeulen der Deformationsstege 35, die die Einlegeteil-Mittelschicht 33 bilden, in Richtung der Deformations-Freiräume 36 möglich ist. Im Querschnitt gesehen sind die Deformationsstege rechteckförmig ausgebildet, wobei jeweils eine schmale Stegstirnseite der Deformationsstege 35 in Fahrtrichtung weist. Insgesamt ist das Einlegeteil 31 im Querschnitt in Fahrzeughochachsenrichtung gesehen U-förmig ausgebildet, wobei die durch einen Randschicht-Schenkelbereich 37 gebildeten U-Schenkel nur in einem Mittelbereich bezogen auf die Fahrzeugquerrichtung des Einlegeteils 31 ausgebildet sind. Die U-Basis wird durch die Einlegeteil-Mittelschicht 33 und einen Randschicht-Basisbereich 38, der zusammen mit dem Randschicht-Schenkelbereich 37 die Einlegeteil-Randschichten 32 und 33 ausbildet, gebildet. Dies ist aus Fig. 8, in der schematisch eine perspektivische Rückansicht des Einlegeteils 31 dargestellt ist, deutlich.

Insgesamt ist unabhängig von der Ausführungsform des Einlegeteils 4, 18 und 31 ein guter Fußgängerschutz geschaffen, da in dem Bereich zwischen dem Stoßfängerquerträger 3, 28 und dem Stoßfängerüberzug 5, 29 durch die Ausbildung beispielsweise von Deformationstöpfen 10, 22 oder Deformationsstegen 35 mit dementsprechend zugeordneten Deformations-Freiräumen 26, 36 und Deformations-Ausnehmungen 27 jeweils in der Einlegeteil-Mittelschicht 8, 20, 33 im Kollisionsfall eine Deformation der Einlegeteil-Mittelschicht 8, 20, 33 mit einer geringen Restblocklänge möglich ist. Die Einlegeteil-Mittelschicht 8, 20, 33 kann dabei in die Deformations-Freiräume 26, 36 bzw. die Deformations-Ausnehmungen 27 vorzugsweise in Fahrzeugquerrichtung ausbeulen. Die Einlegeteil-Randschichten 7, 9, 19, 21, 32, 34 können beispielsweise aus einem energieabsorbierenden Vollmaterial hergestellt sein, vorzugsweise einem Schaummaterial, da im Bereich der Einlegeteil-Randschichten 7, 9, 19, 21, 32, 34 aufgrund der den Stoßfängerquerträger 3, 28 übergreifenden Montage des Einlegeteils 4, 18, 31 ein größerer Deformationsweg zur Verfügung steht, so dass auch bei einer dementsprechenden Restblocklänge, die durch das Vollschaummaterial gegeben ist, ein guter Fußgängerschutz gewährleistet ist. Die Ausführung der Einlegeteil-Randschichten 7, 9, 19, 21, 32, 34 und der Einlegeteil-Mittelschichten 8, 20, 33 bezüglich der verwendeten Dichte des Schaummaterials kann je nach den Anforderungen der jeweiligen Stoßfängeranordnung 1 festgelegt werden.

### BEZUGSZEICHENLISTE

- 1: Stoßfängeranordnung
- 2: Fahrzeugfrontend
- 3: Stoßfängerquerträger
- 4: Einlegeteil
- 5: Stoßfängerüberzug
- 6: Typschadenelement
- 7: Einlegeteil-Randschicht
- 8: Einlegeteil-Mittelschicht
- 9: Einlegeteil-Randschicht
- 10: Deformationstopf
- 11: Randschicht-Schenkelbereich
- 12: Randschicht-Schenkelbereich
- 13: Randschicht-Basisbereich
- 14: Randschicht-Basisbereich
- 15: Abstützlasche
- 16: Abstützlasche
- 17: Spaltabstand
- 18: Einlegeteil
- 19: Einlegeteil-Randschicht
- 20: Einlegeteil-Mittelschicht
- 21: Einlegeteil-Randschicht
- 22: Deformationstopf
- 23: Randschicht-Schenkelbereich
- 24: Randschicht-Basisbereich
- 25: Topfboden
- 26: Deformations-Freiraum
- 27: Deformations-Ausnehmung
- 28: Stoßfängerquerträger
- 29: Stoßfängerüberzug
- 30: Bein
- 31: Einlegeteil
- 32: Einlegeteil-Randschicht
- 33: Einlegeteil-Mittelschicht
- 34: Einlegeteil-Randschicht
- 35: Deformationssteg
- 36: Deformations-Freiraum
- 37: Randschicht-Schenkelbereich
- 38: Randschicht-Basisbereich

## Patentansprüche

1. Stoßfängeranordnung für ein Fahrzeug, insbesondere für ein Kraftfahrzeug,
mit wenigstens einem im Fahrzeugfrontendbereich in Fahrzeugquerrichtung verlaufenden Stoßfängerquerträger,
mit einem Stoßfängerüberzug, der die Außenhaut der Stoßfängeranordnung bildet, und
mit wenigstens einem energieabsorbierenden Einlegeteil, das im montierten Zustand wenigstens bereichsweise zwischen dem Stoßfängerquerträger und dem Stoßfängerüberzug angeordnet ist, wobei im Einlegeteil eine Mehrzahl von Deformations-Ausnehmungen und/oder Deformations-Freiräumen vorgesehen ist,
**dadurch gekennzeichnet,**
**dass** das Einlegeteil (4, 18, 31) dreischichtig aus einer ersten Einlegeteil-Randschicht (7, 19, 32) als erste Energieabsorptionsschicht und einer Einlegeteil-Mittelschicht (8, 20, 33) als zweite Energieabsorptionsschicht sowie einer zweiten Einlegeteil-Randschicht (9, 21, 34) als dritte Energieabsorptionsschicht aufgebaut ist,
**dass** die Einlegeteil-Mittelschicht (8, 20, 33) gegenüber den beiden Einlegeteil-Randschichten (7, 9, 19, 21, 32, 34) ein unterschiedliches Energieabsorptionsvermögen aufweist,
**dass** die Einlegeteil-Mittelschicht (8, 20, 33) dem Stoßfängerquerträger (3, 28) so zugeordnet ist, dass im montierten Zustand des Einlegeteils (4, 18, 31) die Einlegeteil-Mittelschicht (8, 20, 33) in etwa in Höhe des Stoßfängerquerträgers (3, 28) anordenbar ist, und
**dass** die Deformations-Ausnehmungen (27) und/oder die Deformations-Freiräume (26, 36) in der Einlegeteil-Mittelschicht (8, 20, 33) ausgebildet sind dergestalt, dass im Kollisionsfall bei einer Krafteinwirkung auf den Stoßfängerüberzug (5, 29) das Einlegeteil (4, 18, 31) unter Ausnutzung der Deformations-Ausnehmungen (27) und/oder der Deformations-Freiräume (26, 36) wenigstens bereichsweise in Fahrzeugquerrichtung und/oder in Fahrzeuglängsrichtung mit geringer Blocklänge zur Energieabsorption plastisch verformbar ist.

2. Stoßfängeranordnung nach Anspruch 1, **dadurch gekennzeichnet, dass** die drei Energieabsorptionsschichten (7, 8, 9, 19, 20, 21, 32, 33, 34) im montierten Zustand des Einlegeteils (4, 18, 31) in Fahrzeughochachsenrichtung gesehen übereinander angeordnet sind und sich vorzugsweise jeweils über die gesamte Einlegeteilbreite erstrecken.

3. Stoßfängeranordnung nach Anspruch 1 oder 2, **dadurch gekennzeichnet, dass** die beiden Einlegeteil-Randschichten (7, 9, 19, 21, 32, 34) aus einem Schaummaterial hergestellt sind und in etwa eine gleiche Dichte aufweisen zur Ausbildung von Einlegeteil-Randschichten (7, 9, 19, 21, 32, 34) mit im wesentlichen gleichem Energieabsorptionsvermögen.

4. Stoßfängeranordnung nach einem der Ansprüche 1 bis 3, **dadurch gekennzeichnet, dass** die beiden Einlegeteil-Randschichten (7, 9, 19, 21, 32, 34) aus einem härteren Schaummaterial sind und die Einlegeteil-Mittelschicht (8, 20, 33) aus einem gegenüber dem Schaummaterial der Einlegeteil-Randschichten (7, 9, 19, 21, 32, 34) weicheren Schaummaterial hergestellt ist.

5. Stoßfängeranordnung nach einem der Ansprüche 1 bis 4, **dadurch gekennzeichnet, dass** die beiden Einlegeteil-Randschichten (7, 9, 19, 21, 32, 34) jeweils mit der Einlegeteil-Mittelschicht (8, 20, 33) wenigstens bereichsweise in wenigstens einem flächigen Anlagebereich miteinander fest verbunden sind, vorzugsweise miteinander verschäumt oder fest verklebt sind, zur Ausbildung des Einlegeteils (4, 18, 31).

6. Stoßfängeranordnung nach einem der Ansprüche 1 bis 5, **dadurch gekennzeichnet,**
**dass** das Einlegeteil (4, 18, 31) im Querschnitt gesehen wenigstens bereichsweise U-förmig ausgebildet ist dergestalt, dass im montierten Zustand des Einlegeteils (4, 18, 31) die beiden Einlegeteil-Randschichten (7, 9, 19, 21, 32, 34) mit je einem Randschicht-Schenkelbereich (11, 12, 23, 37) entgegen der Fahrtrichtung über die Einlegeteil-Mittelschicht (8, 20, 33) überstehen zur Ausbildung der beiden U-Schenkel und dass je ein Randschicht-Basisbereich (13, 14, 24, 38) zusammen mit der dazwischenliegenden Einlegeteil-Mittelschicht (8, 20, 33) die U-Basis bildet, und
**dass** das Einlegeteil (4, 18, 31) im montierten Zustand den Stoßfängerquerträger (3, 28) in etwa formschlüssig übergreift dergestalt, dass die beiden Randschicht-Schenkelbereiche (11, 12, 23, 37) des Einlegeteils (4, 18, 31) und die Einlegeteil-Mittelschicht (8, 20, 33) wenigstens bereichsweise in einer flächigen Anlageverbindung am Stoßfängerquerträger (3, 28) anliegen.

7. Stoßfängeranordnung nach Anspruch 6, **dadurch gekennzeichnet,**
**dass** der Stoßfängerquerträger (3, 28) im Querschnitt gesehen wenigstens bereichsweise U-förmig ausgebildet ist dergestalt, dass im montierten Zustand des Stoßfängerquerträgers (3, 28) die beiden U-Schenkel in etwa horizontal angeordnet sind und entgegen der Fahrtrichtung weisen und dass die U-Basis in etwa vertikal angeordnet ist, und
**dass** an den beiden U-Schenkeln des Stoßfängerquerträgers (3, 28) jeweils eine wenigstens im Bereich der Einlegeteil-Randschichten (7, 9, 19, 21, 32, 34) in Fahrzeugquerrichtung verlaufende Abstützlasche (15, 16) angeordnet ist dergestalt, dass im montierten Zustand die beiden Einlegeteil-Randschichten (7, 9, 19, 21, 32, 34) im Kollisionsfall jeweils an der zugeordneten Abstützlasche (15, 16) abstützbar sind.

8. Stoßfängeranordnung nach einem der Ansprüche 1 bis 7, **dadurch gekennzeichnet, dass** an der Einlegeteil-Mittelschicht (8, 20) eine Mehrzahl von noppenartigen Deformationstöpfen (10, 22) ausgebildet ist dergestalt, dass die Topfinnenräume die Deformations-Ausnehmungen (27) bilden.

9. Stoßfängeranordnung nach Anspruch 8, **dadurch gekennzeichnet, dass** die Topfböden (25) der Deformationstöpfe (10, 22) im montierten Zustand des Einlegeteils (4, 18) in Richtung des Stoßfängerquerträgers (3, 28) weisen, vorzugsweise am Stoßfängerquerträger (3, 28) anliegen.

10. Stoßfängeranordnung nach Anspruch 8 oder 9, **dadurch gekennzeichnet, dass** die jedem Topfboden (25) der Deformationstöpfe (10, 22) gegenüberliegende Seite offen ausgebildet ist.

11. Stoßfängeranordnung nach einem der Ansprüche 8 bis 10, **dadurch gekennzeichnet,**
**dass** die Deformationstöpfe (10, 22) in etwa rechteckförmig ausgebildet sind, und
**dass** wenigstens die im montierten Zustand des Einlegeteils (4, 18) in etwa vertikal verlaufenden Topfwände konisch verlaufen, so dass die Fläche des jeweiligen Topfbodens (25) kleiner als die Fläche der gegenüberliegenden Seite ist dergestalt, dass zwischen den in etwa vertikal verlaufenden Topfwänden Deformations-Freiräume (26) ausbildbar sind.

12. Stoßfängeranordnung nach einem der Ansprüche 1 bis 7, **dadurch gekennzeichnet, dass** die Einlegeteil-Mittelschicht (33) durch eine Mehrzahl von im montierten Zustand des Einlegeteils (31) in Fahrzeughochachsenrichtung verlaufenden Deformationsstegen (35) gebildet ist dergestalt, dass zwischen den Deformationsstegen (35) die Deformations-Freiräume (36) ausgebildet sind.

13. Stoßfängeranordnung nach Anspruch 12, **dadurch gekennzeichnet, dass** die Deformationsstege (35) im Querschnitt gesehen rechteckförmig ausgebildet sind jeweils mit einer schmalen in Fahrtrichtung weisenden Stegstirnseite.

14. Stoßfängeranordnung nach einem der Ansprüche 1 bis 13, **dadurch gekennzeichnet, dass** im montierten Zustand der Stoßfängeranordnung (1) die dem Stoßfängerüberzug (5, 29) zugewandte Seite des Einlegeteils (4, 18, 31) vorzugsweise mit geringem Spaltabstand (17) entlang der Innenkontur des Stoßfängerüberzuges (5, 29) verläuft.

## Claims

1. Fender arrangement for a vehicle, especially for a motor vehicle,
having at least one fender cross member running in the vehicle front end region in the transverse direction of the vehicle,
having a fender cover, which forms the outer skin of the fender arrangement, and having at least one energy-absorbing insert, which, in the assembled state, is disposed at least regionally between the fender cross member and the fender cover, a plurality of deformation recesses and/or deformation clearances being provided in the insert,
**characterized**
**in that** the insert (4, 18, 31) is constructed in three layers from a first insert outer layer (7, 19, 32) as a first energy absorption layer, and an insert middle layer (8, 20, 33) as a second energy absorption layer, and a second insert outer layer (9, 21, 34) as a third energy absorption layer,
**in that** the insert middle layer (8, 20, 33) has a different energy absorbency than the two insert outer layers (7, 9, 19, 21, 32, 34),
**in that** the insert middle layer (8, 20, 33) is assigned to the fender cross member (3, 28) such that, in the assembled state of the insert (4, 18, 31), the insert middle layer (8, 20, 33) can be disposed approximately level with the fender cross member (3, 28), and
**in that** the deformation recesses (27) and/or the deformation clearances (26, 36) are configured in the insert middle layer (8, 20, 33) such that, in a collision, if a force acts upon the fender cover (5, 29), the insert (4, 18, 31), in utilizing the deformation recesses (27) and/or of the deformation clearances (26, 36), is at least regionally plastically deformable in the transverse direction of the vehicle and/or in the longitudinal direction of the vehicle, with small block length for energy absorption.

2. Fender arrangement according to Claim 1,
**characterized in that** the three energy absorption layers (7, 8, 9, 19, 20, 21, 32, 33, 34), in the assembled state of the insert (4, 18, 31), viewed in the direction of the vehicle vertical axis, are disposed one above the other and preferably extend respectively over the whole of the insert width.

3. Fender arrangement according to Claim 1 or 2, **characterized in that** the two insert outer layers (7, 9, 19, 21, 32, 34) are made of a foam material and have approximately equal density for the configuration of insert outer layers (7, 9, 19, 21, 32, 34) with substantially equal energy absorbency.

4. Fender arrangement according to one of Claims 1 to 3, **characterized in that** the two insert outer layers (7, 9, 19, 21, 32, 34) are made of a harder foam material and the insert middle layer (8, 20, 33) is made of a foam material which is softer than the foam material of the insert outer layers (7, 9, 19, 21, 32, 34).

5. Fender arrangement according to one of Claims 1 to 4, **characterized in that** the two insert outer layers (7, 9, 19, 21, 32, 34) are fixedly connected one to the other respectively with the insert middle layer (8, 20, 33), at least regionally, in at least one plane contact region, preferably are joined together with foam or bonded fixedly together, for the configuration of the insert (4, 18, 31).

6. Fender arrangement according to one of Claims 1 to 5, **characterized**
**in that** the insert (4, 18, 31), viewed in cross section, is configured at least regionally in a U-shape such that, in the assembled state of the insert (4, 18, 31), the two insert outer layers (7, 9, 19, 21, 32, 34) project with a respective outer layer arm region (11, 12, 23, 37), counter to the direction of travel, over the insert middle layer (8, 20, 33), for the configuration of the two U-legs, and that a respective outer layer base region (13, 14, 24, 38) forms together with the intervening insert middle layer (8, 20, 33) the U-base, and
**in that**, in the assembled state, the insert (4, 18, 31) overgrips the fender cross member (3, 28) in approximate form closure such that the two outer layer arm regions (11, 12, 23, 37) of the insert (4, 18, 31) and the insert middle layer (8, 20, 33) bear at least regionally in a plane contact joint against the fender cross member (3, 28).

7. Fender arrangement according to Claim 6,
**characterized**
**in that** the fender cross member (3, 28), viewed in cross section, is configured at least regionally in a U-shape such that, in the assembled state of the fender cross member (3, 28), the two U-legs are disposed approximately horizontally and point counter to the direction of travel and that the U-base is disposed approximately vertically, and
**in that** on the two U-legs of the fender cross member (3, 28) there is respectively disposed a supporting bracket (15, 16) running, at least in the region of the insert outer layers (7, 9, 19, 21, 32, 34), in the transverse direction of the vehicle, such that, in the assembled state, the two insert outer layers (7, 9, 19, 21, 32, 34) can be respectively supported against the assigned supporting bracket (15, 16) in a collision.

8. Fender arrangement according to one of Claims 1 to 7, **characterized**
**in that** a plurality of knob-like deformation pots (10, 22) is configured on the insert middle layer (8, 20) such that the pot interiors form the deformation recesses (27).

9. Fender arrangement according to Claim 8,
**characterized**
**in that** the pot bottoms (25) of the deformation pots (10, 22), in the assembled state of the insert (4, 18), point in the direction of the fender cross member (3, 28), preferably bear against the fender cross member (3, 28).

10. Fender arrangement according to Claim 8 or 9,
**characterized**
**in that** the side lying opposite each pot bottom (25) of the deformation pots (10, 22) is openly configured.

11. Fender arrangement according to one of Claims 8 to 10, **characterized**
**in that** the deformation pots (10, 22) are approximately rectangularly configured, and
**in that** at least those pot walls which run approximately vertically in the assembled state of the insert (4, 18) run conically, so that the surface area of the respective pot bottom (25) is smaller than the surface area of the opposite-lying side such that, between the approximately vertically running pot walls, deformation clearances (26) can be configured.

12. Fender arrangement according to one of Claims 1 to 7, **characterized**
**in that** the insert middle layer (33) is formed by a plurality of deformation webs (35), which, in the assembled state of the insert (31), run in the direction of the vehicle vertical axis, such that, between the deformation webs (35), deformation clearances (36) are configured.

13. Fender arrangement according to Claim 12,
**characterized**
**in that** the deformation webs (35), viewed in cross section, are rectangularly configured, respectively with a narrow web end face pointing in the direction of travel.

14. Fender arrangement according to one of Claims 1 to 13, **characterized**
**in that**, in the assembled state of the fender arrangement (1), that side of the insert (4, 18, 31) which is facing the fender cover (5, 29) runs preferably with small gap distance (17) along the inner contour of the fender cover (5, 29).

## Revendications

1. Arrangement pare-chocs pour un véhicule, notamment pour un véhicule automobile, comprenant au moins une traverse de pare-chocs qui s'étend dans la zone de l'extrémité avant du véhicule dans le sens transversal du véhicule, comprenant un enrobage de pare-chocs qui forme la croûte de l'arrangement pare-chocs et comprenant au moins un insert absorbant l'énergie qui, en position montée, est disposé au moins par zones entre la traverse de pare-chocs et l'enrobage de pare-chocs, une pluralité de creux de déformation et/ou d'espaces libres de déformation étant prévue dans l'insert, **caractérisé en ce**
**que** l'insert (4, 18, 31) est à trois couches constituées d'une première couche de bordure d'insert (7, 19, 32) faisant office de première couche d'absorption et d'une couche centrale d'insert (8, 20, 33) faisant office de deuxième couche d'absorption et d'une couche de bordure d'insert (9, 21, 34) faisant office de troisième couche d'absorption,
**que** la couche centrale d'insert (8, 20, 33) présente une capacité d'absorption d'énergie différente de celle des deux couches de bordure d'insert (7, 9, 19, 21, 32, 34),
**que** la couche centrale d'insert (8, 20, 33) est associée à la traverse de pare-chocs (3, 28) de telle sorte qu'en position montée de l'insert (4, 18, 31), la couche centrale d'insert (8, 20, 33) peut être disposée approximativement à hauteur de la traverse de pare-chocs (3, 28) et
**que** les creux de déformation (27) et/ou les espaces libres de déformation (26, 36) sont formés dans la couche centrale d'insert (8, 20, 33) de telle sorte qu'en cas de collision avec un effet de force sur l'enrobage de pare-chocs (5, 29), l'insert (4, 18, 31) est déformable par effet élastique au moins par zones dans le sens transversal du véhicule et/ou dans le sens longitudinal du véhicule avec une faible longueur de bloc pour l'absorption d'énergie en utilisant les creux de déformation (27) et/ou les espaces libres de déformation (26, 36).

2. Arrangement pare-chocs selon la revendication 1, **caractérisé en ce que** les trois couches d'absorption d'énergie (7, 8, 9, 19, 20, 21, 32, 33, 34) en position montée de l'insert (4, 18, 31), vus dans le sens de l'axe de hauteur du véhicule, sont disposées les unes au-dessus des autres et s'étendent de préférence à chaque fois sur toute la largeur de l'insert.

3. Arrangement pare-chocs selon la revendication 1 ou 2, **caractérisé en ce que** les deux couches de bordure d'insert (7, 9, 19, 21, 32, 34) sont fabriquées dans un matériau alvéolaire et présentent approximativement la même densité pour former des couches de bordure d'insert (7, 9, 19, 21, 32, 34) ayant des capacités d'absorption d'énergie essentiellement égales.

4. Arrangement pare-chocs selon l'une des revendications 1 à 3, **caractérisé en ce que** les deux couches de bordure d'insert (7, 9, 19, 21, 32, 34) sont fabriquées dans un matériau alvéolaire plus dur et la couche centrale d'insert (8, 20, 33) est fabriquée dans un matériau alvéolaire plus tendre par rapport au matériau alvéolaire des couches de bordure d'insert (7, 9, 19, 21, 32, 34).

5. Arrangement pare-chocs selon l'une des revendications 1 à 4, **caractérisé en ce que** les deux couches de bordure d'insert (7, 9, 19, 21, 32, 34) avec la couche centrale d'insert (8, 20, 33) sont respectivement reliées ensemble au moins par zones dans au moins une zone d'appui plane, de préférence moussées entre elles ou collées à demeure pour former l'insert (4, 18, 31).

6. Arrangement pare-chocs selon l'une des revendications 1 à 5, **caractérisé en ce que** l'insert (4, 18, 31), vue en section transversale, est configuré au moins par zones en forme de U de telle sorte que, lorsque l'insert (4, 18, 31) est en position montée, les deux couches de bordure d'insert (7, 9, 19, 21, 32, 34) font respectivement saillie au-dessus de la couche centrale d'insert (8, 20, 33) dans le sens inverse du sens du déplacement avec une zone de branche de couche de bordure (11, 12, 23, 37) pour former les deux branches du U et qu'une zone de base de couche de bordure (13, 14, 24, 38) combinée avec la couche centrale d'insert (8, 20, 33) qui est intercalée entre elles forme la base du U et
que l'insert (4, 18, 31) en position montée chevauche la traverse de pare-chocs (3, 28) approximativement par engagement géométrique de telle sorte que les deux zones de branche de couche de bordure (11, 12, 23, 37) de l'insert (4, 18, 31) et la couche centrale d'insert (8, 20, 33) reposent au moins par zones contre la traverse de pare-chocs (3, 28) dans une liaison d'appui plane.

7. Arrangement pare-chocs selon la revendication 6, **caractérisé en ce que** la traverse de pare-chocs (3, 28), vue en section transversale, est au moins par zones configurée en forme de U de telle sorte qu'en position montée de la traverse de pare-chocs (3, 28), les deux branches du U sont disposées à peu près horizontalement et sont dirigées en sens inverse du sens du déplacement et que la base du U est disposée à peu près verticalement et
que sur les deux branches du U de la traverse de pare-chocs (3, 28) est à chaque fois disposée, au moins dans la zone des couches de bordure d'insert (7, 9, 19, 21, 32, 34) et s'étendant dans le sens transversal du véhicule, une éclisse d'appui (15, 16) de telle sorte qu'en position montée, les deux couches de bordure d'insert (7, 9, 19, 21, 32, 34) puisse respectivement s'appuyer sur l'éclisse d'appui (15, 16) associée en cas de collision.

8. Arrangement pare-chocs selon l'une des revendications 1 à 7, **caractérisé en ce que** sur la couche centrale d'insert (8, 20) est façonnée une pluralité de pots de déformation (10, 22) ressemblant à des noppes de telle sorte que les espaces intérieurs des pots forment les creux de déformation (27).

9. Arrangement pare-chocs selon la revendication 8, **caractérisé en ce que** les fonds de pot (25) des pots de déformation (10, 22), en position montée de l'insert (4, 18), sont dirigés en direction de la traverse de pare-chocs (3, 28), de préférence reposent sur la traverse de pare-chocs (3, 28).

10. Arrangement pare-chocs selon la revendication 8 ou 9, **caractérisé en ce que** chaque côté des pots de déformation (10, 22) opposé au fond de pot (25) est réalisé ouvert.

11. Arrangement pare-chocs selon l'une des revendications 8 à 10, **caractérisé en ce que** les pots de déformation (10, 22) sont de configuration approximativement rectangulaire et qu'au moins les parois des pots qui s'étendent à peu près verticalement en position montée de l'insert (4, 18) sont coniques de sorte que la surface du fond de pot (25) correspondant soit inférieure à la surface du côté opposé de manière à ce que les espaces libres de déformation (26) puissent être formés entre les parois de pot s'étendant à peu près verticalement.

12. Arrangement pare-chocs selon l'une des revendications 1 à 7, **caractérisé en ce que** la couche centrale d'insert (33) est formée par une pluralité de nervures de déformation (35) qui s'étendent dans le sens de l'axe de hauteur du véhicule en position montée de l'insert (31) de telle sorte que les espaces libres de déformation (36) soient formés entre les nervures de déformation (35).

13. Arrangement pare-chocs selon la revendication 12, **caractérisé en ce que** les nervures de déformation (35), vues en section transversale, sont de forme rectangulaire à chaque fois avec un côté frontal de nervure étroit dirigé dans le sens du déplacement.

14. Arrangement pare-chocs selon l'une des revendications 1 à 13, **caractérisé en ce qu'**en position montée de l'arrangement pare-chocs (1), le côté de l'insert (4, 18, 31) à l'opposé de l'enrobage de pare-chocs (5, 29) s'étend de préférence avec un faible espacement (17) le long du contour intérieur de l'enrobage de pare-chocs (5, 29).
